(19) Europäisches Patentamt
European Patent Office
Office européen des brevets

(11) EP 4 617 055 A1

(12) EUROPEAN PATENT APPLICATION
published in accordance with Art. 153(4) EPC

(43) Date of publication:
**17.09.2025 Bulletin 2025/38**

(21) Application number: **23888607.1**

(22) Date of filing: **02.11.2023**

(51) International Patent Classification (IPC):
***B32B 27/00*** *(2006.01)* ***B29C 45/14*** *(2006.01)*
***B29C 51/10*** *(2006.01)* ***B29C 51/14*** *(2006.01)*
***B32B 27/16*** *(2006.01)*

(52) Cooperative Patent Classification (CPC):
**B29C 45/14; B29C 51/10; B29C 51/14; B32B 27/00; B32B 27/16**

(86) International application number:
**PCT/JP2023/039552**

(87) International publication number:
**WO 2024/101259 (16.05.2024 Gazette 2024/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **10.11.2022 JP 2022180348**

(71) Applicant: **MITSUBISHI GAS CHEMICAL COMPANY, INC.**
**Chiyoda-ku**
**Tokyo 100-8324 (JP)**

(72) Inventors:
- **YAMAGISHI, Hiroaki**
**Tokyo 125-8601 (JP)**
- **KAMEI, Shota**
**Tokyo 125-8601 (JP)**
- **KAJIMOTO, Chihiro**
**Tokyo 125-8601 (JP)**
- **HAGA, Ryoichi**
**Tokorozawa-shi, Saitama 359-1164 (JP)**

(74) Representative: **Hoffmann Eitle**
**Patent- und Rechtsanwälte PartmbB**
**Arabellastraße 30**
**81925 München (DE)**

# (54) LAMINATE FOR THERMOFORMING, MOLDED ARTICLE USING SAME, AND METHOD FOR PRODUCING MOLDED ARTICLE

(57) According to one embodiment, there is provided an after-cure type thermoforming laminate layered a base material layer, an uncured hard coat layer and a protective film in this order, wherein after removing the protective film and curing the hard coat layer, the nanoindenter hardness (Hi) of the hard coat layer before a weather resistance test and the nanoindenter hardness (Hf) thereof after a weather resistance test satisfy the following relationship:

$$0.9\ Hi < Hf < 1.4\ Hi.$$



Processed by Luminess, 75001 PARIS (FR)

## Description

### Technical Field

The present invention relates to an after-cure type thermoforming laminate, a molded body using the same, and a method for producing the molded body.

### Background Art

To date, plastic home appliances and in-vehicle products have generally been produced by coating plastic molded products, as necessary. However, since such methods have a large environmental impact, various methods have been studied, including a method of insert molding of thermoformable decorative films as a typical example. In recent years, the demand for chemical resistance and scratch resistance of molded products has increased, and the demand for thermoforming laminates (e.g., films) with a hard coat has particularly increased. Thermoforming laminates with a hard coat are generally produced by applying a hard-coating liquid onto a base material and then curing it (Patent Literature 1).

In common hard-coated films, there is a trade-off relationship between formability, and chemical resistance and/or scratch resistance. In other words, increasing formability usually results in a decrease in chemical resistance and/or scratch resistance, and improving chemical resistance and/or scratch resistance usually results in poor formability. Thus, in order to solve this problem, an after-cure type thermoforming laminate has been proposed, in which a hard-coating liquid is applied onto a base material and is dried to form a hard coat layer, which is then molded without being cured, and the hard coat layer is cured by UV irradiation or the like after the molding.

Some after-cure type thermoforming laminates have a protective film attached onto the surface of a hard coat layer to prevent scratches and foreign matters from getting caught in them. If such a foreign matter gets caught in them during the molding step, it will cause a significant decrease in yield. Thus, it is desirable to mold the thermoforming laminate in a clean environment with the protective film attached.

However, in order to perform thermoforming, it is necessary to heat a thermoforming laminate to a temperature equal to or higher than the glass transition temperature (Tg) of the base material of the laminate, so as to soften the laminate. In the case of a conventional after-cure type thermoforming laminate, if the laminate with a protective film attached is heated to the above-described temperature, it has been problematic in that the curing of the hard coat layer progresses, and that the thermoformability is significantly impaired.

Furthermore, in the case of a conventional after-cure type thermoforming laminate, if thermoforming is performed on the laminate with a protective film attached, it has also been problematic in that the pattern of the protective film is transcribed, deteriorating the appearance.

For these reasons, in conventional after-cure type thermoforming laminates, it has been common to peel off the protective film before molding. In order to solve the aforementioned problems, a thermoforming laminate has been proposed, which can be thermoformed with the protective film attached and can give a molded product excellent in terms of thermoformability, chemical resistance, scratch resistance, etc. (Patent Document 2).

Furthermore, for articles used in environments exposed to sunlight, it is desirable for the articles to have weather resistance in addition to the above-described properties. In other words, if a molded body having weather resistance can be produced using a laminate having a hard coat layer, it will be possible to provide products that are less likely to deteriorate even when they are used in environments exposed to sunlight.

### Citation List

### Patent Literature

Patent Literature 1: JP Patent Publication (Kohyo) No. 2017-508828

Patent Literature 2: International Publication No. WO2021/157588

### Summary of Invention

### Technical Problem

It is an object of the present invention to provide an after-cure type thermoforming laminate, from which a molded body with excellent weather resistance can be obtained.

Solution to Problem

As a result of intensive studies, the present inventors have succeeded in obtaining an after-cure type thermoforming laminate, in which when a hard coat layer is cured and a weather resistance test is performed, a change in the nanoindenter hardness of the hard coat layer before and after the weather resistance test is small. By using such a thermoforming laminate, a molded body with excellent weather resistance can be produced. The present invention is, for example, as follows.

[1] An after-cure type thermoforming laminate layered a base material layer, an uncured hard coat layer and a protective film in this order, wherein

after removing the protective film and curing the hard coat layer, the nanoindenter hardness (Hi) of the hard coat layer before a weather resistance test and the nanoindenter hardness (Hf) thereof after a weather resistance test satisfy the following relationship:

$$0.9\ Hi < Hf < 1.4\ Hi,$$

the nanoindenter hardness is measured at 30°C in accordance with ISO14577-1, and
the weather resistance test is performed under the conditions of illuminance of 50 mW/cm$^2$, a black panel temperature of 63°C, a relative humidity of 50%, and 50 hours (continuous irradiation).

[2] The after-cure type thermoforming laminate according to the above [1], wherein

the hard coat layer comprises a polymer having a (meth)acryloyl group and inorganic oxide nanoparticles, and the content of the polymer having a (meth)acryloyl group in the hard coat layer is 40 to 99 parts by weight, and the content of the inorganic oxide nanoparticles therein is 1 to 60 parts by weight, when the total of the polymer and the nanoparticles is set to be 100 parts by weight.

[3] The after-cure type thermoforming laminate according to the above [2], wherein the polymer having a (meth) acryloyl group has an acrylic equivalent of 250 to 700 g/eq, and the inorganic oxide nanoparticles have an average particle diameter of 5 to 150 nm.
[3-1] The after-cure type thermoforming laminate according to the above [2] or [3], wherein the polymer having a (meth)acryloyl group has a weight average molecular weight of 5,000 to 200,000.
[4] The after-cure type thermoforming laminate according to any one of the above [2] to [3-1], wherein

the hard coat layer further comprises a light stabilizer and/or an ultraviolet absorber, and
the total content of the light stabilizer and/or the ultraviolet absorber is 0.1 to 10 parts by weight, when the total of the polymer and the nanoparticles comprised in the uncured hard coat layer is set to be 100 parts by weight.

[4-1] The after-cure type thermoforming laminate according to any one of the above [2] to [4], wherein the hard coat layer further comprises a leveling agent and/or a photopolymerization initiator.
[5] The after-cure type thermoforming laminate according to any one of the above [1] to [4-1], wherein the uncured hard coat layer has a nanoindenter hardness at 30°C of 200 N/mm$^2$ or more.
[5-1] The after-cure type thermoforming laminate according to any one of the above [1] to [5], wherein

after removing the protective film and curing the hard coat layer, when the surface of the hard coat layer is scratched by reciprocating a steel wool 15 times under a pressure of 100 gf/cm$^2$, the haze change ($\Delta$H) of the hard coat layer before and after the scratching is 3.0% or less, and
the haze change ($\Delta$H) is evaluated based on JIS K 7136: 2000.

[6] The after-cure type thermoforming laminate according to any one of the above [1] to [5-1], wherein the hard coat layer is active energy ray curable.
[6-1] The after-cure type thermoforming laminate according to any one of the above [1] to [6], wherein the thickness of the hard coat layer is 1 to 10 $\mu$m.
[7] The after-cure type thermoforming laminate according to any one of the above [1] to [6-1], wherein the base material layer comprises a polycarbonate resin.
[7-1] The after-cure type thermoforming laminate according to the above [7], wherein the base material layer

comprises a polycarbonate resin layer and an acrylic resin layer.

[8] A molded body, which is obtained by curing an uncured hard coat layer in a molded intermediate obtained by molding the after-cure type thermoforming laminate according to any one of the above [1] to [7-1].

[9] A method for producing a molded body, comprising:

thermoforming the after-cure type thermoforming laminate according to any one of the above [1] to [7-1],
removing a protective film from the thermoformed after-cure type thermoforming laminate, and
curing a hard coat layer exposed on the surface by removing the protective film.

[10] The method according to the above [9], wherein the thermoforming is carried out by insert molding.

Advantageous Effects of Invention

According to the present invention, there can be provided an after-cure type thermoforming laminate, from which a molded body with excellent weather resistance can be obtained.

Brief Description of Drawings

[Figure 1] Figure 1 is a cross-sectional view showing an example of the thermoforming laminate according to the embodiment.

Description of Embodiments

Hereinafter, the embodiments of the present invention will be described in detail with reference to the drawings.

According to one embodiment, the after-cure type thermoforming laminate of the present invention is formed by laminating a base material layer, an uncured hard coat layer and a protective film in this order, wherein after removing the protective film and curing the hard coat layer, the nanoindenter hardness (Hi) of the hard coat layer before a weather resistance test and the nanoindenter hardness (Hf) thereof after a weather resistance test satisfy the following relationship:

$$0.9\ Hi < Hf < 1.4\ Hi.$$

Herein, the nanoindenter hardness is measured at 30°C in accordance with ISO14577-1, and the weather resistance test is performed under the conditions of illuminance of 50 $mW/cm^2$, a black panel temperature of 63°C, a relative humidity of 50%, and 50 hours (continuous irradiation).

The present inventors have successfully obtained an after-cure type thermoforming laminate, in which when a weather resistance test is performed on a hard coat layer after curing, a change in the nanoindenter hardness of the hard coat layer before and after the weather resistance test is small. Then, the present inventors have confirmed that a molded body obtained from the laminate having such a hard coat layer has excellent adhesion between the hard coat layer and the base material layer, and that the peeling of the hard coat layer from the base material layer by the weather resistance test is significantly suppressed. Generally, when the hardness of the hard coat layer is intended to be increased to ensure the strength and the scratch resistance of the hard coat layer, the adhesion between the hard coat layer and the base material layer tends to be deteriorated due to the curing shrinkage (dimensional change) when the hard coat layer is cured. Despite such a situation, the present inventors have discovered a hard coat layer that has excellent adhesion to the base material layer even after a weather resistance test, while ensuring the desired hardness and scratch resistance. The molded body with excellent weather resistance can be preferably used for articles that are used in environments exposed to sunlight (e.g., interior and exterior parts of automobiles, building materials, mobile devices, etc.).

There are considered various factors that suppress the change in the nanoindenter hardness of the hard coat layer before and after the weather resistance test, including the composition of the hard coat layer and curing conditions, which suppress curing shrinkage. For example, a difference in the degree of curing shrinkage due to the composition of the hard coat layer, and the type and amount of additives used, may have an influence on the degree of curing shrinkage, and as a result, these factors may have an influence on the change amount in nanoindenter hardness before and after the weather resistance test. Specific examples may include a light stabilizer and/or an ultraviolet absorber comprised in the hard coat layer, which are presumed to act to capture radicals generated during the weather resistance test and to suppress polymerization and curing shrinkage of the resin comprised in the hard coat layer. In addition, such a light stabilizer and an ultraviolet absorber are also presumed to act to suppress embrittlement (a decrease in the indenter hardness) due to autoxidation of the hard coat layer in the later stage of the weather resistance test. However, the factors are not limited to these.

Hereinafter, individual components of the after-cure type thermoforming laminate according to the embodiment, the production method, the physical properties, intended uses, etc. will be described in detail.

[1] Thermoforming laminate

The thermoforming laminate according to the embodiment comprises (a) a base material layer, (b) a curable (uncured) hard coat layer, and (c) a protective film, and these components are laminated in the order of (a) the base material layer, (b) the hard coat layer, and (c)the protective film. That is to say, in the thermoforming laminate according to the embodiment, (a) the base material layer is laminated on one surface of (b) the hard coat layer, and (c) the protective film is laminated on the other surface of (b) the hard coat layer. In addition, the laminate according to the embodiment may also comprise layers other than the above-described (a) to (c), and may also comprise a plurality of individual layers of the above (a) to (c).

Figure 1 is a cross-sectional view showing an example of the thermoforming laminate according to the embodiment. In Figure 1, a laminate 10 has a structure in which a hard coat layer 16 is laminated on a base material layer (e.g., a base material layer consisting of a polymethyl methacrylate layer (PMMA resin layer) 20 and a polycarbonate layer (PC resin layer) 22), and a protective film 12 is further laminated on the hard coat layer 16. In other words, the surface of the hard coat layer 16 is protected by the protective film 12. Thus, when the base material layer consists of two or more layers in this way, the arrangement thereof is not particularly limited.

The thermoforming laminate according to the embodiment is an after-cure type. Therefore, the thermoforming laminate according to the embodiment comprises an uncured hard coat layer, and the molding step can also be performed while the hard coat layer is still uncured. When the molding step is performed while the hard coat layer is still uncured, specifically, the thermoforming laminate is molded into a desired shape, the protective film is peeled off, and the hard coat layer exposed on the surface can be cured. Molding may be performed after peeling off the protective film, but as described below, according to the embodiment of the present invention, molding can be performed while the protective film is still attached. The means for curing the hard coat layer depends on the material of the hard coat layer, and it may be, for example, curing with active energy rays or heat. Conventionally, when molding is performed after hardening the hard coat layer, there has been a problem that fine cracks are generated in the hard coat layer. However, if molding is performed while the hard coat layer is still uncured using an after-cure type thermoforming laminate, such a problem does not occur. In addition, the thermoforming laminate according to the embodiment can be successfully molded while the protective film is still attached. Therefore, it is possible to prevent the hard coat layer from being scratched or foreign matter from being caught in it during molding.

Hereafter, individual layers of the thermoforming laminate according to the embodiment will be successively described. In the present description, the mixed solution for the hard coat layer to be applied onto the base material layer is referred to as a "hard coat composition" and a state in which the hard coat composition is applied onto the base material layer and is dried before curing is referred to as an "uncured hard coat layer." In addition, a state in which the hard coat layer is cured by an active energy ray, heat, etc. is referred to as a "cured hard coat layer." Moreover, the cured state also includes a semi-cured state in which the hard coat layer is not completely cured.

[2] Base material layer

The base material layer is preferably laminated so as to be in contact with the surface of the hard coat layer opposite to the protective film. However, it is not limited thereto, and another layer may be disposed between the base material layer and the hard coat layer.

The base material layer preferably comprises a thermoplastic resin. The type of the thermoplastic resin is not particularly limited, and various types of resins, such as a polycarbonate (PC) resin, an acrylic resin such as polymethyl methacrylate (PMMA), polyethylene terephthalate (PET), triacetyl cellulose (TAC), polyethylene naphthalate (PEN), polyimide (PI), a cycloolefin copolymer (COC), a norbornene-containing resin, polyethersulfone, cellophane, and aromatic polyamide, can be used. Of the aforementioned thermoplastic resins, the base material layer preferably comprises at least a polycarbonate resin, and from the viewpoint of toughness and heat resistance, the base material layer more preferably comprises an aromatic polycarbonate resin.

The type of the polycarbonate resin is not particularly limited, as long as it comprises a carbonate ester bond -[O-R-OCO]- (wherein R is an aliphatic group, an aromatic group, or a group containing both an aliphatic group and an aromatic group, and may have either a linear or a branched structure) in the molecular main chain thereof. Among them, a polycarbonate resin having a bisphenol skeleton is preferable, and a bisphenol A type polycarbonate resin having a bisphenol A skeleton or a bisphenol C type polycarbonate resin having a bisphenol C skeleton is particularly preferred. As such a polycarbonate resin, a mixture of a bisphenol A type polycarbonate resin and a bisphenol C type polycarbonate resin, or a copolymer of bisphenol A and bisphenol C may be used. In order to improve the hardness of the base material layer, it is preferable to use a bisphenol C type polycarbonate resin (for example, a polycarbonate resin consisting of

bisphenol C, a mixture of a bisphenol A type polycarbonate resin and a bisphenol C type polycarbonate resin, or a copolymer of bisphenol A and bisphenol C).

An acrylic resin is also preferable as a thermoplastic resin comprised in the base material layer. Specific examples of such an acrylic resin may include, but are not particularly limited to, homopolymers of various (meth)acrylic acid esters including polymethyl methacrylate (PMMA) and methyl methacrylate (MMA) as typical examples, and copolymers of PMMA, MMA, or monomers constituting these and one or more other monomers. Moreover, a mixture of multiple resins can also be used. Among these, a (meth)acrylate comprising a cyclic alkyl structure, which has low birefringence, low moisture absorption, and excellent heat resistance, is preferable. Examples of such a (meth)acrylate may include, but are not limited to, Acrypet (manufactured by Mitsubishi Rayon Co., Ltd.), Delpet (manufactured by Asahi Kasei Chemicals Corporation), and Parapet (manufactured by Kuraray Co., Ltd.).

In addition, the base material layer may be formed with multiple layers having different compositions. For example, a base material layer consisting of the above-mentioned polycarbonate resin layer and acrylic resin layer can be used. The base material layer consisting of multiple layers is not limited to a two-layer structure, and it may also be three or more layers. For instance, when a base material layer comprising a polycarbonate resin layer and an acrylic resin layer is used, it is preferable that a hard coat layer is laminated on the acrylic resin side. By laminating a hard coat layer with excellent weather resistance and an acrylic resin layer on a polycarbonate resin layer with poor weather resistance, a film with excellent weather resistance can be obtained. By using a base material layer with a multi-layer structure containing a polycarbonate resin layer and an acrylic resin layer, it is possible to maintain the thermoformability of the base material layer while improving the surface hardness of the base material layer.

The viscosity average molecular weight of the thermoplastic resin comprised in the base material layer is preferably 15,000 to 40,000, more preferably 20,000 to 35,000, and further preferably 22,500 to 25,000.

The base material layer may also comprise additives as components other than the thermoplastic resin. Examples of the additives may include a heat stabilizer, an antioxidant, a flame retardant, a flame retardant aid, an ultraviolet ray absorber, a release agent and a coloring agent, and the base material layer may comprise one or two or more types of these additives. Furthermore, an antistatic agent, a fluorescent brightener, an antifogging agent, a fluidity improver, a plasticizer, a dispersant, an antibacterial agent, etc. may also be added to the base material layer.

The content of the thermoplastic resin in the base material layer is preferably 80% by mass or more, more preferably 90% by mass or more, and particularly preferably 95% by mass or more, with respect to the mass of the base material layer. In addition, in a base material layer comprising a polycarbonate resin as a main component, the percentage of the polycarbonate resin to the base material layer is preferably 80% by mass or more, more preferably 90% by mass or more, and particularly preferably 95% by mass or more. In a base material layer comprising an acrylic resin as a main component, the percentage of the acrylic resin to the base material layer is preferably 80% by mass or more, more preferably 90% by mass or more, and particularly preferably 95% by mass or more.

The thickness of the base material layer is not particularly limited, and it is preferably 0.10 mm to 1.0 mm. The thickness of the base material layer is, for example, 0.15 mm to 0.80 mm, 0.18 mm to 0.60 mm, or 0.25 mm to 0.40 mm. By using a base material layer having such a thickness, a film having excellent formability and hardness can be realized.

When the base material layer consists of a plurality of layers, the thickness of each layer may be within the above-mentioned range, or the thickness of the entire base material layer may be within the above-mentioned range.

[3] Hard coat layer

The composition of the hard coat layer is not particularly limited, as long as the change in the nanoindenter hardness before and after the weather resistance test falls within the predetermined range described in the present description. The material constituting the hard coat layer may be, for example, an active energy ray curable resin or a thermosetting resin. When the hard coat layer mainly comprises such a curable resin, it is desirable in that the hard coat layer can be cured without using a curing agent. The hard coat layer may further comprise various additives for improving the properties, and such additives may include nanoparticles, a light stabilizer, an ultraviolet absorber, a leveling agent, a photopolymerization initiator, etc.

(1) Curable resin

The hard coat layer preferably comprises an active energy ray curable resin or a thermosetting resin, and more preferably comprises an active energy ray curable resin. Any resin can be used as the active energy ray curable resin, as long as it has active energy ray curability. Examples of the active energy ray curable resin may include (meth)acrylate polymers, and more specifically, an epoxy (meth)acrylate polymer, a urethane (meth)acrylate polymer, and a polyester (meth)acrylate polymer. In particular, polymers having a (meth)acryloyl group, such as (meth)acrylate polymers having a (meth)acryloyl group, are preferably used. More specific examples of such polymers may include an epoxy (meth)acrylate polymer having a (meth)acryloyl group, a urethane (meth)acrylate polymer having a (meth)acryloyl group, and a polyester

(meth)acrylate polymer having a (meth)acryloyl group. Active energy ray curable resins are easily available from various companies. Hereinafter, the polymer having a (meth)acryloyl group is also referred to as a "(meth)acryloyl polymer."

It is to be noted that, in the present description, (meth)acrylate means methacrylate and/or acrylate, and that the (meth)acryloyl group means a methacryloyl group and/or an acryloyl group. Other similar descriptions are also interpreted as above.

- Epoxy (meth)acrylate polymer

The active energy ray curable resin may be, for example, an epoxy (meth)acrylate polymer. Among others, an epoxy (meth)acrylate polymer having a (meth)acryloyl group is preferable. A synthesis example of an epoxy (meth) acrylate is shown in the following formula (1). The epoxy (meth)acrylate can be obtained by adding an acrylic acid or methacrylic acid having an unsaturated bond, etc. to an epoxy compound.

[Formula 1]

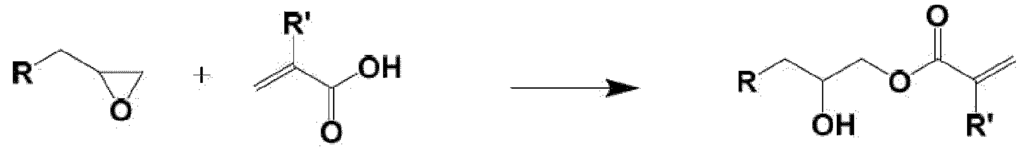
(1)

(In the formula (1), R is an alkyl group containing 1 to 12 carbon atoms or a hydrogen atom, and the alkyl group may be substituted with one or more substituents selected from an epoxy group, a hydroxyl group, an acryloyl group, and a methacryloyl group; and R' is a methyl group or a hydrogen atom.)

The epoxy (meth)acrylate polymer can be obtained, for example, by copolymerizing (meth)acrylic acid and (meth)acrylic acid glycidyl ether to synthesize an epoxy resin having a (meth)acrylate skeleton, and then adding acrylic acid, methacrylic acid, etc. to the epoxy resin. The synthetic example thereof is shown in the following formula (2).

[Formula 2]

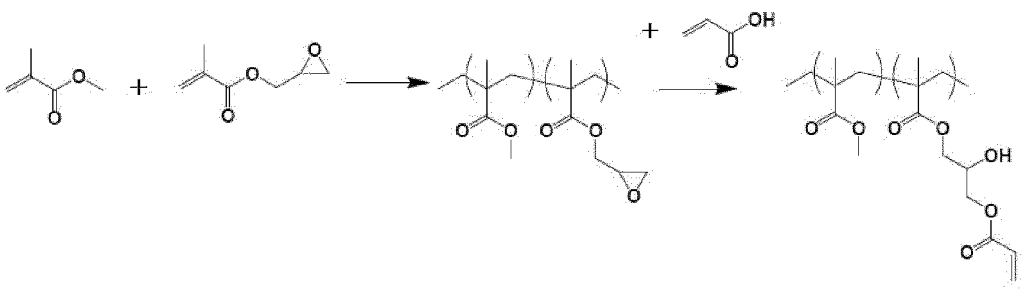
(2)

Preferred epoxy (meth)acrylate polymers may include, for example, those having repeating units shown in the following formula (I):

[Formula 3]

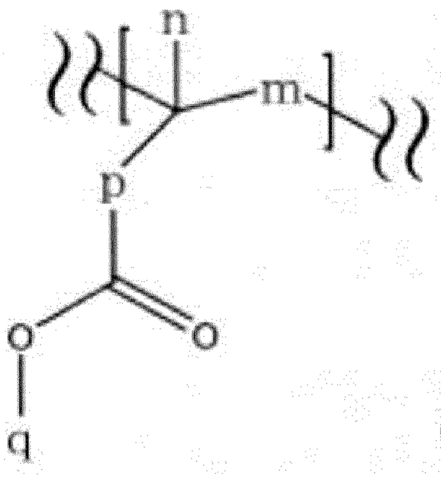

(I)

In the formula (I), m is an alkylene group containing 1 to 4 carbon atoms or a single bond; n is an alkyl group containing 1 to 4 carbon atoms or a hydrogen atom; p is a single bond or an alkylene group containing 1 or 2 carbon atoms; and q is an alkyl group containing 1 to 12 carbon atoms, which may optionally have one or more substituents selected from an epoxy group, a hydroxyl group, an acryloyl group and a methacryloyl group, or a hydrogen atom.

In the above formula (I), preferably, m is an alkylene group containing 1 or 2 carbon atoms; n is an alkyl group containing 1 or 2 carbon atoms; p is a single bond or a methylene group; and q is an alkyl group containing 1 to 6 carbon atoms, which may optionally have one or more substituents selected from an epoxy group, a hydroxyl group and an acryloyl group, or a hydrogen atom. More preferably, m is a methylene group; n is a methyl group; p is a single bond; and q is an alkyl group containing 5 or less carbon atoms, which may optionally have one or more substituents selected from a methyl group and an epoxy group, or an alkyl group containing 8 or less carbon atoms, which may optionally have one or more substituents selected from a hydroxyl group and an acryloyl group.

Specific examples of the repeating unit represented by formula (I) may include those represented by the following formulae (II-a), (II-b) and (II-c).

[Formula 4]

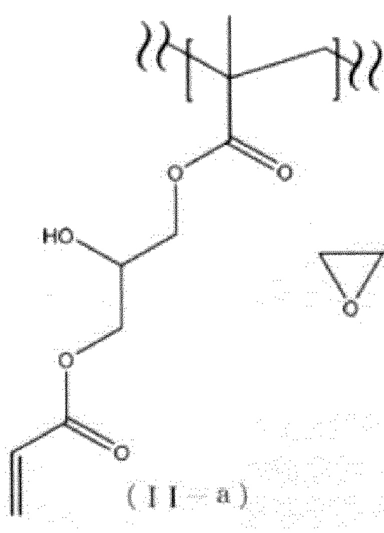

(II-a)

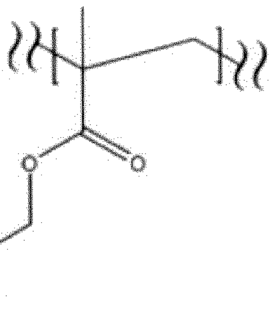

(II-b)

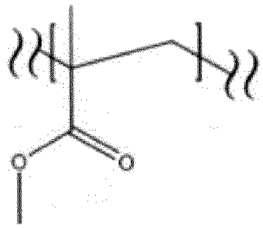

(II-c)

When the epoxy (meth)acrylate polymer comprises the repeating units represented by the above formulae (II-a), (II-b) and (II-c), the percentage of the repeating units represented by formula (II-a) is preferably 30 to 85 mol%, and more preferably 40 to 80 mol%, based on the total number of moles of the repeating units represented by formula (II-a), (II-b) and (II-c). The repeating units represented by formula (II-b) are preferably 5 to 30 mol%, and more preferably 10 to 25 mol%, based on the above-described total number of moles. The repeating units represented by formula (II-c) are preferably 10 to 40 mol%, and more preferably 10 to 35 mol%, based on the above-described total number of moles.

Moreover, the molar ratio of the repeating unit of formula (II-a), the repeating unit of formula (II-b), and the

repeating unit of formula (II-c) is preferably 4.5 to 5.5 : 1.5 to 2.5 : 2.5 to 3.5, for example, about 5 : 2 : 3.

- Urethane (meth)acrylate polymer

The polymer having a (meth)acryloyl group may be a urethane (meth)acrylate polymer. Specific examples may include the urethane (meth)acrylate polymers described below.

Isocyanate compound

The isocyanate compound used herein is, for example, an aromatic isocyanate optionally having an alkyl substituent (a methyl group, etc.), preferably an aromatic isocyanate containing 6 to 16 carbon atoms, more preferably an aromatic isocyanate containing 7 to 14 carbon atoms, and particularly preferably an aromatic isocyanate containing 8 to 12 carbon atoms.

The isocyanate compound is preferably an aromatic isocyanate, but aliphatic and alicyclic isocyanates may also be used.

Specific examples of the isocyanate compound may include: polyisocyanates such as tolylene diisocyanate, diphenylmethane diisocyanate, hydrogenated diphenylmethane diisocyanate, polyphenylmethane polyisocyanate, modified diphenylmethane diisocyanate, hydrogenated xylylene diisocyanate, xylylene diisocyanate, hexamethylene diisocyanate, trimethylhexamethylene diisocyanate, tetramethylxylylene diisocyanate, isophorone diisocyanate, norbornene diisocyanate, 1,3-bis(isocyanatomethyl)cyclohexane, phenylene diisocyanate, lysine diisocyanate, lysine triisocyanate, and naphthalene diisocyanate; trimer compounds or tetramer compounds of these polyisocyanates; biuret-type polyisocyanates, water-dispersible polyisocyanates (e.g., "Aquanate 100," "Aquanate 110," "Aquanate 200," "Aquanate 210," etc., manufactured by Nippon Polyurethane Industry Co., Ltd.); and reaction products of these polyisocyanates with polyols.

Among these isocyanate compounds, particularly preferable are diphenylmethane diisocyanate, toluene diisocyanate, naphthalene diisocyanate, a trimethylolpropane (TMP) adduct of toluene diisocyanate, an isocyanate body of toluene diisocyanate, a TMP adduct of xylylene diisocyanate, and dicyclohexylmethane diisocyanate (H12MDI), isophorone diisocyanate (IPDI), xylylene diisocyanate (XDI), etc., which are shown in the following formulae.

[Formula 5]

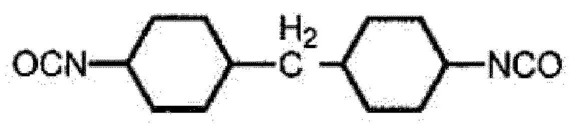

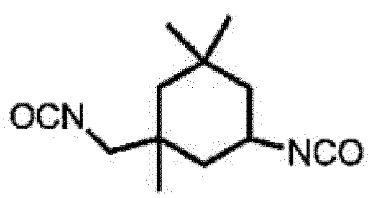

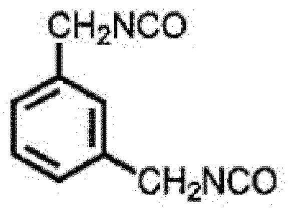

Acrylate compound

Examples of the acrylate compound for forming a urethane (meth)acrylate polymer comprising a molecular structure of cyclic skeleton may include pentaerythritol triacrylate (PETA), dipentaerythritol pentaacrylate (DPPA), and hydroxypropyl (meth)acrylate (hydroxypropyl acrylate; HPA).

Moreover, as such an acrylate compound, a compound having a (meth)acryloyloxy group and a hydroxyl group, for example, a monofunctional (meth)acrylic compound having a hydroxyl group, can also be used.

Examples of the monofunctional (meth)acrylic compound having a hydroxyl group may include hydroxyl group-containing mono(meth)acrylates {for example, hydroxyalkyl(meth)acrylates [e.g., hydroxy C2-20 alkyl (meth)acrylates such as 2-hydroxyethyl(meth)acrylate, 3-hydroxypropyl(meth)acrylate and 6-hydroxyhexyl(meth)acrylate, preferably

hydroxy C2-12 alkyl (meth)acrylates, and more preferably hydroxy C2-6 alkyl (meth)acrylates], polyalkylene glycol mono(meth)acrylates [e.g., poly C2-4 alkylene glycol mono(meth)acrylates such as diethylene glycol mono(meth)acrylate and polyethylene glycol mono(meth)acrylate], and mono(meth)acrylates of polyols having three or more hydroxyl groups [e.g., alkane polyol mono(meth)acrylates such as glycerin mono(meth)acrylate and trimethylolpropane mono(meth) acrylate, and mono(meth)acrylates of polymers of alkane polyols such as diglycerin mono(meth)acrylate]}, N-hydroxyalkyl(meth)acrylamides (e.g., N-hydroxy C1-4 alkyl(meth)acrylamides such as N-methylol(meth)acrylamide and N-(2-hydroxyethyl)(meth)acrylamide), and adducts of lactones (e.g., C4-10 lactones such as ε-caprolactone) added to the hydroxyl groups of these compounds (e.g., hydroxyalkyl(meth)acrylates) (e.g., adducts of about 1 to 5 moles of lactone added).

It is to be noted that these acrylate compounds may be used alone or in combination of two or more types.

A preferred specific example of the compound for forming a (meth)acryloyloxy group is 2-hydroxy-3-phenoxypropyl acrylate.

Among the above, pentaerythritol triacrylate (PETA), dipentaerythritol pentaacrylate (DPPA), and hydroxypropyl (meth)acrylate (hydroxypropyl acrylate; HPA) are particularly preferable.

Copolymer of isocyanate compound and acrylate compound

Preferred specific examples of a copolymer of an isocyanate compound and an acrylate compound, that is, a urethane (meth)acrylate polymer, may include a copolymer of xylylene diisocyanate (XDI) and pentaerythritol triacrylate (PETA), a copolymer of XDI and dipentaerythritol pentaacrylate (DPPA), a copolymer of dicyclohexylmethane diisocyanate (H12MDI) and PETA, a copolymer of isophorone diisocyanate (IPDI) and PETA, and a copolymer of XDI and hydroxypropyl (meth)acrylate (HPA).

Moreover, examples of the urethane (meth)acrylate polymer comprising a molecular structure of cyclic skeleton may include copolymers using polyol compounds, in addition to the above-mentioned isocyanate compounds and acrylate compounds. The polyol compound (polyhydric alcohol) is a compound having two or more hydroxyl groups in a single molecule thereof, and examples thereof may include the following. That is, examples of the polyol compound may include: dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 3-methyl-1,2-butanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-4,5-pentanediol, 2,2,4-trimethyl-1,3-pentanediol, 1,6-hexanediol, 1,5-hexanediol, 1,4-hexanediol, 2,5-hexanediol, neopentyl glycol, and hydroxypivalic acid neopentyl glycol ester; polylactone diols obtained by adding lactones such as ε-caprolactone to these dihydric alcohols; ester diols such as bis(hydroxyethyl) terephthalate; polyether diols such as alkylene oxide adducts of bisphenol A, polyethylene glycol, polypropylene glycol, and polybutylene glycol; α-olefin epoxides such as propylene oxide and butylene oxide; monoepoxy compounds such as Cardura E10 [manufactured by Shell Chemicals Japan Ltd., glycidyl ester of synthetic highly branched saturated fatty acid]; trihydric or higher alcohols such as glycerin, trimethylolpropane, trimethylolethane, diglycerin, triglycerin, 1,2,6-hexanetriol, pentaerythritol, dipentaerythritol, sorbitol, and mannitol; polylactone polyols in which lactones such as ε-caprolactone are added to these trihydric or higher alcohols; alicyclic polyhydric alcohols such as 1,4-cyclohexanedimethanol, tricyclodecanedimethanol, hydrogenated bisphenol A, hydrogenated bisphenol F, hydrogenated bisphenol A, and hydrogenated bisphenol F.

As a polyol constituent unit, a urethane (meth)acrylate polymer containing a constituent unit derived from tricyclodidecanedimethanol (TCDDM) represented by the following formula is preferably used.

[Formula 6]

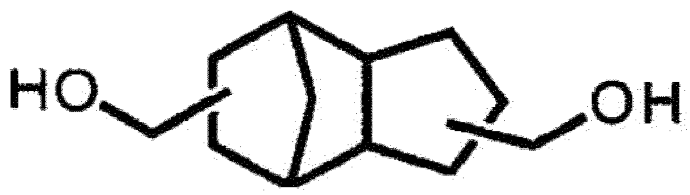

Preferred specific examples of the urethane (meth)acrylate polymer containing a polyol constituent unit may include a copolymer of tricyclodidecanedimethanol (TCDDM), IPDI and PETA, a copolymer of TCDDM, H12MDI and PETA, copolymers in which DPPA is used instead of or together with PETA in these copolymers, and a copolymer of TCDDM, xylylene diisocyanate (XDI) and hydroxypropyl (meth)acrylate (HPA).

The urethane (meth)acrylate polymer comprising a constituent unit derived from a polyol compound in addition to

an isocyanate compound and a compound having a (meth)acryloyloxy group and a hydroxyl group preferably comprises at least a component represented by the following formula (i):

(A3)-O(OC)HN-A2-HN(OC)-O-A1-O-(CO)NH-A2-NH-(CO)O-(A3) ... (i)

(In formula (i),

A1 is an alkylene group derived from the aforementioned polyol compound,
A2 is each independently an alkylene group derived from the aforementioned isocyanate compound, and
A3 is each independently an alkyl group derived from the aforementioned compound having a (meth)acryloyloxy group and a hydroxyl group.

The compound for forming A3 may be, for example, 2-hydroxy-3-phenoxypropyl acrylate.
Further specific examples of the urethane (meth)acrylate polymer may include the following compound comprising constituent units derived from ethylene glycol, pentaerythritol triacrylate, and isophorone diisocyanate. In the following formula, n is an integer of 0 to 10, preferably an integer of 1 to 5, and more preferably an integer of 1 to 3.

[Formula 7]

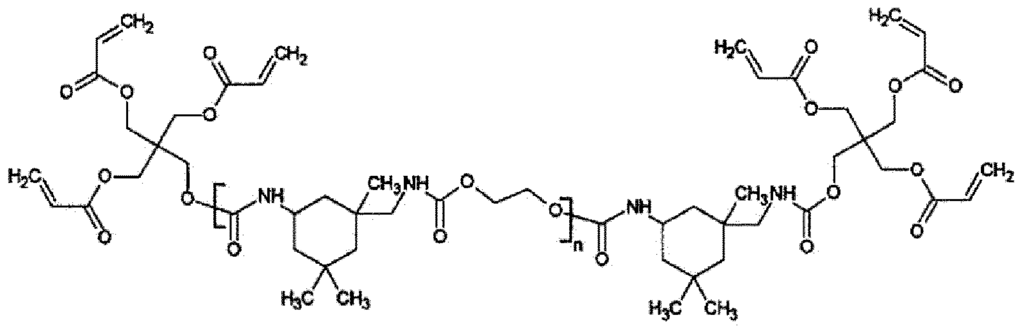

In the urethane (meth)acrylate polymer, the ratio between the constituent units derived from the compound having a (meth)acryloyloxy group and a hydroxyl group and the constituent units derived from the isocyanate compound is preferably 99 : 1 to 30 : 70 (weight ratio), more preferably 97 : 3 to 60 : 40, and further preferably 95 : 5 to 80 : 20.

(Acrylate-containing urethane (meth)acrylate polymer)

A preferred specific example of the urethane (meth)acrylate polymer may be one containing a constituent unit derived from a urethane (meth)acrylate and a constituent unit derived from a (meth)acrylate. A more preferred specific example of such a urethane (meth)acrylate polymer may be one containing a constituent unit derived from a hexafunctional urethane (meth)acrylate and a constituent unit derived from a difunctional (meth)acrylate.

(Hexafunctional) urethane acrylate

As mentioned above, the urethane (meth)acrylate polymer preferably comprises a constituent unit derived from a urethane (meth)acrylate, in particular, a hexafunctional urethane (meth)acrylate.
Preferred examples of the hexafunctional urethane acrylate may include those represented by the following formulae, i.e., a reaction product of dicyclohexylmethane diisocyanate (H12MDI) and pentaerythritol triacrylate (PETA), and a reaction product of isophorone diisocyanate (IPDI) and PETA. Specific examples of preferred products of these hexafunctional urethane acrylates may include UN-3320HC (a reaction product of H12MDI and PETA; manufactured by Negami Chemical Industrial Co., Ltd.), CN-968 (a reaction product of IPDI and PETA; manufactured by Sartomer Japan Co., Ltd.), and CN-975 (manufactured by Sartomer Japan Co., Ltd.).

[Formula 8]

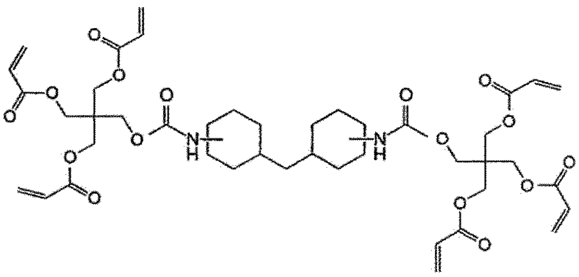

[Formula 9]

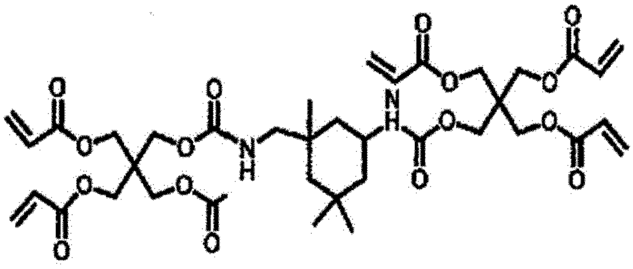

(Meth)acrylates (difunctional (meth)acrylates, etc.)

The (meth)acrylate constituent unit that can constitute the urethane (meth)acrylate polymer is preferably a constituent unit derived from a compound containing 4 to 20 carbon atoms, which comprises at least one (meth) acryloyloxy group and at least one vinyl ether group and which may optionally have a substituent. The number of carbon atoms in the (meth)acrylate is preferably 6 to 18, and more preferably 8 to 16. The substituent of the (meth)acrylate may be an alkyl group and the like.
In addition, the (meth)acrylate is preferably difunctional.
As such a (meth)acrylate, for example, 2-(2-vinyloxyethoxy)ethyl (meth)acrylate [2-(2-vinyloxyethoxy)ethyl acrylate: VEEA] represented by the following formula is preferably used.

[Formula 10]

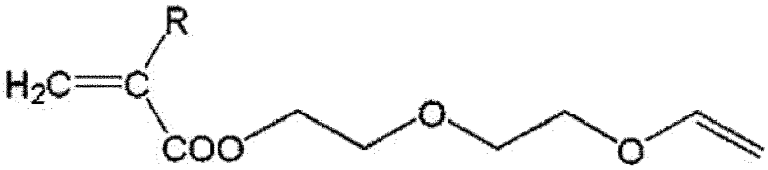

(In the above formula, R is a hydrogen atom or a methyl group.)

In the urethane (meth)acrylate polymer, the ratio between the constituent units derived from the urethane acrylate and the constituent units derived from the (meth)acrylate is preferably 99 : 1 to 30 : 70 (weight ratio), more preferably 97 : 3 to 60 : 40, and further preferably 95 : 5 to 80 : 20.

(Fluorine-containing urethane (meth)acrylate polymer)

As a (meth)acrylate polymer, a fluorine-containing urethane acrylate polymer may be used. The fluorine-containing urethane acrylate polymer preferably comprises at least a component represented by the following formula (ii):

(A3)-O(OC)HN-A2-HN(OC)-O-A1-O-(CO)NH-A2-NH-(CO)O-(A3) ... (ii)

In the above formula (ii), A1 is preferably an alkylene group derived from a fluorine-containing diol containing 8 or

less carbon atoms, which may optionally have a substituent, and the number of carbon atoms is preferably 6 or less, and is, for example, 1 to 4. The substituent comprised in the alkylene group of A1 may be an alkyl group or the like.

In the above formula (ii), A2 is each independently an alkylene group derived from an aliphatic or alicyclic isocyanate containing 4 to 20 carbon atoms, which may optionally have a substituent. The number of carbon atoms in A2 is preferably 6 to 16, and more preferably 8 to 12. The substituent of the alkylene group of A2 may be an alkyl group or the like.

Moreover, The alicyclic isocyanate that forms A2 may be, for example, an isophorone diisocyanate represented by the following formula.

[Formula 11]

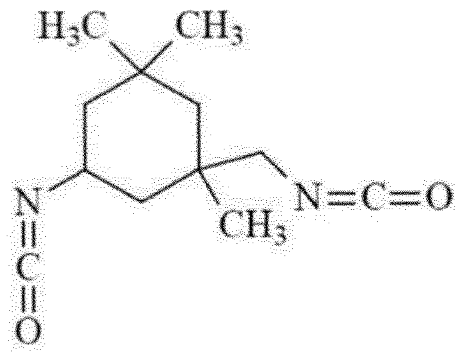

In the above formula (ii), A3 is each independently an alkyl group containing 4 to 30 carbon atoms, which comprises at least one (meth)acryloyloxy group and may further have a substituent. The number of carbon atoms in A3 is preferably 6 to 20, more preferably 8 to 16. The substituent of the alkyl group of A3 may be a branched alkyl group or the like. A3 preferably comprises at least two (meth)acryloyloxy groups, and may comprise, for example, three (meth) acryloyloxy groups.

Moreover, A3 is derived from, for example, a pentaerythritol triacrylate represented by the following formula.

[Formula 12]

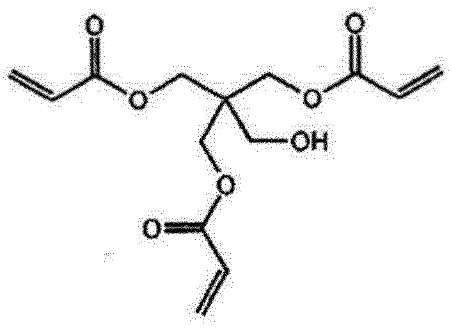

The fluorine-containing urethane acrylate polymer is preferably one formed from each of the above-mentioned compounds, and the fluorine-containing urethane acrylate may include, for example, a compound represented by the following formula (IV).

[Formula 13]

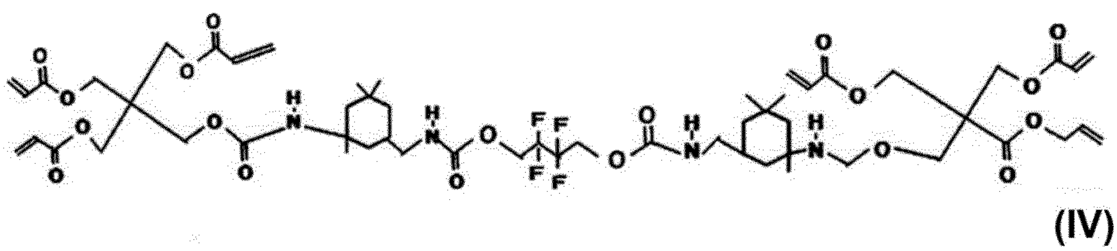

(IV)

- Polyester (meth)acrylate polymer

The polymer having a (meth)acryloyl group may be a polyester (meth)acrylate polymer. The polyester (meth) acrylate polymer may be a polymer obtained by a dehydration condensation reaction of (meth)acrylic acid, polybasic carboxylic acid (anhydride) and polyol. Examples of the polybasic carboxylic acid (anhydride) used in such a dehydration condensation reaction may include (anhydrous) succinic acid, adipic acid, (anhydrous) maleic acid, (anhydrous) itaconic acid, (anhydrous) trimellitic acid, (anhydrous) pyromellitic acid, (anhydrous) hexahydrophthalic acid, (anhydrous) phthalic acid, isophthalic acid, and terephthalic acid. In addition, examples of the polyol used in the dehydration condensation reaction may include 1,4-butanediol, 1,6-hexanediol, diethylene glycol, triethylene glycol, propylene glycol, neopentyl glycol, dimethylol heptane, dimethylol propionic acid, dimethylol butyrionic acid, trimethylol propane, ditrimethylol propane, pentaerythritol, and dipentaerythritol.

Specific examples of the polyester (meth)acrylate polymer may include Aronix M-6100, Aronix M-7100, Aronix M-8030, Aronix M-8060, Aronix M-8530, and Aronix M-8050 (all of which are product names of polyester (meth)acrylate oligomers manufactured by TOAGOSEI CO., LTD.), Laromer PE44F, Laromer LR8907, Laromer PE55F, Laromer PE46T, and Laromer LR8800 (all of which are product names of polyester (meth)acrylate oligomers manufactured by BASF Corporation), Ebecryl 80, Ebecryl 657, Ebecryl 800, Ebecryl 450, Ebecryl 1830, and Ebecryl 584 (all of which are product names of polyester (meth)acrylate oligomers manufactured by Daicel-UCB Co., Ltd.), and Photomer RCC13-429 and Photomer 5018 (both of which are product names of polyester (meth)acrylate oligomers manufactured by SAN NOPCO LIMITED).

- Other active energy ray curable resins

As active energy ray curable resins, (meth)acrylate polymers other than those mentioned above, for example, a (meth)acrylate polymer not containing a (meth)acryloyl group, or a (meth)acrylate polymer not containing a (meth)acrylate skeleton, etc. can also be used.

Furthermore, as such active energy ray curable resins, compounds other than (meth)acrylate compounds, for example, epoxy compounds, oxetane compounds, etc. can also be used.

The hard coat layer may comprise one type of resin or two or more types of resins. The content of the resin(s) in the hard coat layer is preferably 40 to 99 parts by weight, more preferably 50 to 95 parts by weight, and further preferably 60 to 90 parts by weight, when the total of the resin and the nanoparticles is set to be 100 parts by weight.

When a polymer having a (meth)acryloyl group, preferably, a (meth)acrylate polymer having a (meth)acryloyl group is used as an active energy ray curable resin, the polymer preferably has a (meth)acrylic equivalent of 250 to 700 g/eq. The (meth)acrylic equivalent of the polymer having a (meth)acryloyl group is preferably 250 to 700 g/eq, and more preferably 300 to 600 g/eq. Herein, the (meth)acrylic equivalent (g/eq) means the molecular weight of one (meth)acryloyl group that is defined as [molecular weight/number of (meth)acryloyl groups].

In addition, the (meth)acrylate polymer used as an active energy ray curable resin preferably has a weight average molecular weight of 5,000 to 200,000. The weight average molecular weight of the (meth)acrylate polymer is preferably 10,000 to 150,000, more preferably 15,000 to 100,000, and further preferably 20,000 to 50,000.

The weight average molecular weight can be measured based on the description in paragraphs [0061] to [0064] of JP Patent Publication (Kokai) No. 2007-179018 A. Details of the measurement method are shown below.

[Table 1]

| Conditions for measuring weight average molecular weight | |
|---|---|
| Device | "Aliance" manufactured by Waters |
| Column | "Shodex K-805L" (2 columns) manufactured by Showa Denko K.K. |
| Detector | UV detector: 254 nm |
| Eluent | Chloroform |

That is to say, first, a calibration curve showing the relationship between the elution time and the molecular weight of the polymer is created by a universal calibration method using polystyrene as a standard polymer. Thereafter, the elution curve (chromatogram) of the (meth)acrylate polymer is measured under the same conditions as those in the case of the above-mentioned calibration curve. Furthermore, the weight average molecular weight (Mw) is calculated from the elution time (molecular weight) of the polycarbonate resin and the peak area (the number of molecules) at that elution time. The weight average molecular weight is represented by the following formula (A), in which Ni means the number of molecules having a molecular weight Mi.

$$Mw = \Sigma(NiMi^2)/\Sigma(NiMi) \cdot\cdot\cdot\cdot (A)$$

A hard coat layer containing a (meth)acrylate polymer having the above-described (meth)acrylic equivalent and weight-average molecular weight has good tack-free properties before curing and good scratch resistance, etc. after curing, and it is also possible to successfully proceed with curing and polymerization reactions. In addition, by using a polymer having a (meth)acryloyl group in the hard coat layer, the tack-free properties (stickiness-preventing properties) become favorable, and it is possible to suppress deterioration of the appearance even when thermoforming is performed with a protective film attached. This is because the protective film is easily peeled off from the laminate after thermoforming. It is to be noted that such polymers having a (meth)acryloyl group are commercially available and can be easily obtained. For example, the polymers are available from Dainippon Ink and Chemicals, Inc., Kyoeisha Chemical Co., Ltd., DSP GOKYO FOOD & CHEMICAL Co., Ltd., etc.

(2) Multifunctional acrylate compound

The hard coat layer may comprise a pentaerythritol-based multifunctional acrylate compound. Examples of multifunctional acrylate compounds having multiple acrylate groups, preferably, three or more acrylate groups, may include pentaerythritol tetraacrylate and dipentaerythritol hexaacrylate, which are represented by the following formulae (3) and (4), respectively. Other than these compounds, pentaerythritol triacrylate, etc. may be used.

[Formula 14]

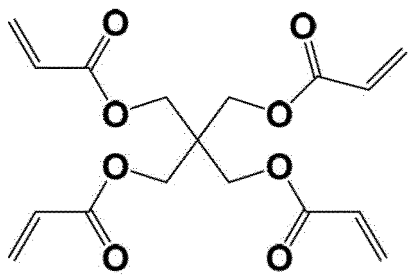

(3)

[Formula 15]

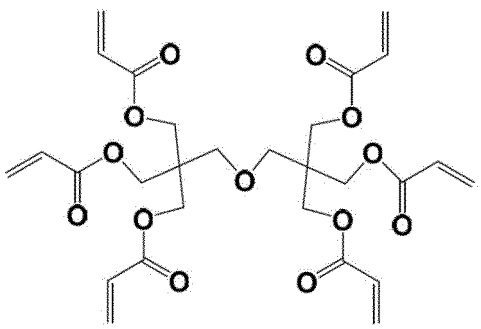

(4)

The content of the polyfunctional acrylate compound in the hard coat layer is preferably 70 parts by weight or less, more preferably 50 parts by weight or less, and further preferably 30 parts by weight or less, when the total of the curable resin and the polyfunctional acrylate compound contained in the hard coat layer is set to be 100 parts by weight. In this way, a polyfunctional acrylate compound is added to the hard coat composition and it is then reacted with an acryloyl group, a glycidyl group (epoxy group), a hydroxyl group, etc. contained in the side chain of the resin (e.g., a (meth)acrylate polymer), so that a hard coat layer with higher scratch resistance can be formed.

(3) Nanoparticles

The hard coat layer may comprise nanoparticles. Thereby, the scratch resistance and hardness of the hard coat layer can be improved. The nanoparticles may be either inorganic or organic particles, but are preferably inorganic nanoparticles, and more preferably inorganic oxide nanoparticles. For example, metal oxide nanoparticles such as

nanosilica, nanoalumina, nanotitania, and nanozirconia are used. In addition, nanodiamonds and the like may also be used.

The hard coat layer preferably comprises silica particles as nanoparticles. The nanoparticles comprised in the hard coat layer are preferably treated with a surface treatment agent. By the surface treatment, the inorganic nanoparticles can be stably dispersed in the hard coat composition, particularly, in a resin (e.g., a (meth)acrylate polymer).

As a surface treatment agent used for nanoparticles, a compound having a substituent capable of binding to the surface of the nanoparticles and a substituent that is highly compatible with the components of the hard coat layer for dispersing the nanoparticles (e.g., a (meth)acrylate polymer, a polymer having a (meth)acryloyl group, etc.) is preferably used. Examples of the surface treatment agent that can be used herein may include a silane compound, alcohol, amine, carboxylic acid, sulfonic acid, and phosphonic acid.

The inorganic nanoparticles preferably have polymerizable groups on their surfaces. The polymerizable groups can be introduced by the surface treatment of the inorganic nanoparticles. Specific examples of the polymerizable groups may include vinyl groups, meth(acrylic) groups, and free radical polymerizable groups.

The average particle diameter of the nanoparticles may be preferably 1 to 150 nm, more preferably 10 to 100 nm, and particularly preferably 30 to 60 nm. It is to be noted that the average particle diameter of the nanoparticles can be measured by observing the cross section of the hard coat layer with an electron microscope photograph. For example, the average particle diameter can be determined by taking a TEM image of the cross section of a particle created by FIB processing or the like, measuring the diameters of 50 observed particles, and calculating the average value. If the particles are not spherical, the average value of the major axis and minor axis is regarded to be the diameter of the particle.

The hard coat layer preferably comprises 1 to 60 parts by weight of nanoparticles, for example, inorganic nanoparticles, when the total of the resin and the nanoparticles comprised in the uncured hard coat layer is set to be 100 parts by weight. The hard coat layer more preferably comprises 10 to 50 parts by weight of inorganic nanoparticles, and further preferably comprises 20 to 40 parts by weight of inorganic nanoparticles.

(4) Light stabilizer

The hard coat layer may comprise a light stabilizer. Thereby, deterioration of the resin by ultraviolet irradiation during a weather resistance test can be suppressed. Examples of the light stabilizer that can be used herein may include hindered amine compounds such as Tinuvin 123 (manufactured by BASF), Tinuvin 770DF (manufactured by BASF), Tinuvin 144 (manufactured by BASF), and LA-81 (manufactured by ADEKA).

The content of the light stabilizer in the hard coat layer is preferably 0.1 to 10 parts by weight, more preferably 0.1 to 7 parts by weight, and particularly preferably 0.3 to 5 parts by weight, when the total of the resin and the nanoparticles comprised in the uncured hard coat layer is set to be 100 parts by weight.

(5) Ultraviolet absorber

The hard coat layer may comprise an ultraviolet absorber. Thereby, degeneration of the resin by ultraviolet irradiation during a weather resistance test can be suppressed. Examples of the ultraviolet absorber that can be used herein may include DAINSORB-T0 (manufactured by Daiwa Fine Chemicals Co., Ltd.), Tinuvin 405 (manufactured by BASF), Tinuvin 477 (manufactured by BASF), Tinuvin479 (manufactured by BASF), Tinuvin 928 (manufactured by BASF), and UVA-903KT (manufactured by BASF).

The content of the ultraviolet absorber in the hard coat layer is preferably 0.1 to 10 parts by weight, more preferably 0.5 to 10 parts by weight, and particularly preferably 1 to 10 parts by weight, when the total of the resin and the nanoparticles comprised in the uncured hard coat layer is set to be 100 parts by weight. In a case where the hard coat layer comprises both the light stabilizer and the ultraviolet absorber, the total content thereof is preferably 0.1 to 10 parts by weight, more preferably 0.5 to 7 parts by weight, and particularly preferably 1 to 10 parts by weight, when the total of the resin and the nanoparticles comprised in the uncured hard coat layer is set to be 100 parts by weight.

(6) Leveling agent

The hard coat layer may comprise a leveling agent. Thereby, the leveling property, antifouling property, and abrasion resistance of the hard coat layer can be improved. As such leveling agents, a silicone-based additive a fluorine-based additive, and the like are preferably used. As a fluorine-based compound contained in the fluorine-based additive, for example, a compound having a perfluoropolyether bond, etc. can be used. Although it is possible to synthesize the fluorine-based additive by oneself, it is also possible to easily obtain a commercially available product. For example, the Megafac RS series of DIC Corporation, the KY series of Shin-Etsu Chemical Co., Ltd., and the OPTOOL series of DAIKIN INDUSTRIES, LTD., etc. can be used.

As a silicone-based compound contained in the silicone-based additive, a compound having a polyalkyl siloxane

bond may be used. Although it is possible to synthesize the silicone-based additive by oneself, it is also possible to easily obtain a commercially available product. For example, the KP series of Shin-Etsu Silicones, the BYK series of BYK Japan KK, the TEGO Glide series of EVONIK, etc. can be used.

The content of the leveling agent is preferably 0.001 to 10 parts by weight, more preferably 0.005 to 5 parts by weight, and particularly preferably 0.01 to 5 parts by weight, when the total of the resin and the nanoparticles comprised in the uncured hard coat layer is set to be 100 parts by weight.

(7) Photopolymerization initiator

As mentioned above, the resin comprised in the hard coat layer is preferably active energy ray curable or heat curable, more preferably active energy ray curable, and particularly preferably ultraviolet ray curable. Therefore, the hard coat layer may further comprise a photopolymerization initiator. Examples of the photopolymerization initiator that can be used herein may include IRGACURE 184 (1-hydroxy-cyclohexyl-phenylketone), IRGACURE 1173 (2-hydroxy-2-methyl-1-phenyl-propan-1-one), IRGACURE TPO (2,4,6-trimethylbenzoyl-diphenyl-phosphine oxide), IRGACURE 819 (bis(2,4,6-trimethylbenzoyl)-phenylphosphine oxide), and Esacure ONE (oligo(2-hydroxy-2-methyl-1-[4-(1-methylvinyl)phenyl]propanone). Among these, Esacure One, etc. is preferable as a photopolymerization initiator from the viewpoint of heat resistance.

The content of the photopolymerization initiator in the hard coat layer is preferably 1 to 6 parts by weight, more preferably 2 to 5 parts by weight, and particularly preferably 2 to 4 parts by weight, when the total of the resin and the nanoparticles comprised in the uncured hard coat layer is set to be 100 parts by weight.

(8) Other additives

The hard coat layer may comprise other additives such as, for example, a heat stabilizer, an antioxidant, a flame retardant, a flame retardant aid, a release agent, a polymerization inhibitor, and a coloring agent. As long as the desired physical properties are not significantly impaired, an antistatic agent, a fluorescent brightener, an antifogging agent, a fluidity improver, a plasticizer, a dispersant, an antibacterial agent, etc. may be added to the hard coat layer.

The dilution solvent used in preparation of the hard coat composition is used to adjust the viscosity, and the dilution solvent can be used without particular restrictions as long as it is a non-polymerizable solvent. By using a dilution solvent, the hard coat composition can be easily applied onto the base material layer.

Examples of the dilution solvent may include toluene, xylene, ethyl acetate, propyl acetate, butyl acetate, methyl cellosolve, ethyl cellosolve, ethyl cellosolve acetate, propylene glycol monomethyl ether acetate, methyl alcohol, ethyl alcohol, isopropyl alcohol, butyl alcohol, diacetone alcohol, acetone, methyl ethyl ketone, methyl isobutyl ketone, cyclohexanone, hexane, heptane, octane, decane, dodecane, propylene glycol monomethyl ether, and 3-methoxybutanol.

< Production of hard coat layer >

The hard coat layer is produced by applying a hard coat composition containing the above-mentioned materials onto a layer adjacent to the hard coat layer (e.g., a base material layer). For example, the hard coat composition can be prepared by mixing individual materials with one another and further stirring the mixture with DISPER.

Examples of the method of applying the hard coat composition may include methods using a bar coater, a gravure coater, a die coater, a dip coat, a spray coat, etc. At this time, after the hard coat composition is applied, drying is performed at a predetermined temperature. The drying temperature is preferably 30°C to 150°C, and more preferably 60°C to 130°C. By performing drying at the temperature in the above-described range, the organic solvent can be removed from the hard coat layer, and deformation of other layers due to heating can be prevented.

The film thickness of the hard coat layer is not particularly limited, and it is preferably 1 to 10 μm, and more preferably 2 to 7 μm. By keeping the film thickness within the above-described range, the desired performance of the hard coat layer can be obtained, and problems regarding adhesion and formability are unlikely to occur.

< Physical properties of hard coat layer >

(i) Weather resistance

The hard coat layer according to the embodiment is excellent in terms of weather resistance. That is to say, for example, the adhesion of the hard coat layer to the base material layer is maintained even after a weather resistance test. This is because, when the weather resistance test is performed on the hard coat layer after curing, the change in the nanoindenter hardness of the hard coat layer before and after the weather resistance test is small. The nanoindenter

hardness (Hi) of the hard coat layer after curing before the weather resistance test and the nanoindenter hardness (Hf) thereof after the weather resistance test satisfy 0.9 Hi < Hf < 1.4 Hi, and they satisfy preferably 0.95 Hi < Hf < 1.4 Hi, and more preferably 0.95 Hi < Hf < 1.3 Hi. Moreover, the percentage of change in the nanoindenter hardness before and after the weather resistance test is preferably - 10% to 40%, more preferably -5% to 40%, and particularly preferably -5% to 30%. Since the amount of change in the nanoindenter hardness of the hard coat layer before and after the weather resistance test is within the above-described range, the hard coat layer has excellent adhesion to the base material layer even after the weather resistance test, namely, the hard coat layer can be said to be excellent in terms of weather resistance. Satisfying 0.9 Hi < Hf means that the hardness of the hard coat layer after curing does not significantly decrease after the weather resistance test, and that the after-cure type thermoforming laminate are excellent in terms of weather resistance and adhesion. On the other hand, satisfying Hf < 1.4 Hi means that an increase in the hardness due to implementation of the weather resistance test is not so large, and that there is no decrease in scratch resistance due to insufficient curing of the hard coat layer before the weather resistance test. When the increase in the hardness after the weather resistance test is significant, it is likely that the curing of the hard coat layer is insufficient. In the current situation where high hardness is required to increase scratch resistance, an insufficiently cured hard coat layer is not practical. It is to be noted that the specific method of measuring nanoindenter hardness is as described in the Examples below.

(ii) Adhesion

The hard coat layer according to the embodiment is excellent in terms of adhesion to the base material layer. Specifically, as described in detail below, the following hard coat layer can be realized: when a hard coat layer is applied onto a PMMA base material and is cured, and then, when the hard coat layer is tested according to the evaluation method of JIS K 5600-5-6: 1999, the edges of the cuts are completely smooth and there is no peeling on any of the lattices.

(iii) Hardness

The hard coat layer according to the embodiment has a preferable nanoindenter hardness. That is, when the nanoindenter hardness of the uncured hard coat layer is measured, the nanoindenter hardness at 30°C is 200 $N/mm^2$ or more (for example, 200 to 1000 $N/mm^2$, 210 to 800 $N/mm^2$, or 200 to 500 $N/mm^2$). As the nanoindenter hardness of an uncured hard coat layer increases, there can be obtained a film that is excellent in terms of scratch resistance in an uncured state and appearance after injection molding. However, if the indenter hardness is too high, formability deteriorates. It is to be noted that the specific method of measuring nanoindenter hardness is as described in the Examples below.

(iv) Scratch resistance

The hard coat layer according to the embodiment has excellent scratch resistance, that is, it has the property of being difficult to scratch. Specifically, after removing the protective film and curing the hard coat layer, when the surface of the hard coat layer is scratched by moving a steel wool back and forth 15 times under a pressure of 100 $gf/cm^2$, the haze change ($\Delta H$) of the hard coat layer before scratching and after scratching is 3% or less. This haze change is preferably 2% or less, and more preferably 1% or less. The specific measurement method is as described in the Examples below, and the haze change ($\Delta H$) is evaluated based on JIS K 7136: 2000.

[4] Protective film

A protective film is placed on the surface of the hard coat layer to prevent the surface of the hard coat layer from being scratched during a molding step, etc. The protective film is attached to the surface of the hard coat layer, for example, after applying a hard coat composition onto a base material layer and drying it. It is preferable that the surface of the protective film in contact with the hard coat layer is an adhesive surface having a moderate adhesive force, and that it is attached to the surface of the hard coat layer. The configuration of the protective film is not particularly limited, and it is preferably a single-layer film having only an adhesive layer, or a film having a two-layer structure consisting of a base material and an adhesive layer. In the protective film having a two-layer structure, the adhesive surface of the adhesive layer is laminated on the hard coat layer, so that it is in contact with the hard coat layer. The protective film may have a multilayer structure further including layers other than the base material and the adhesive layer described above. The protective film may also have a single-layer structure, and even in the protective film having a single-layer structure, the adhesive surface on the hard coat layer side has a moderate adhesive force.

When the protective film has a base material, the base material preferably comprises a thermoplastic resin, and more preferably comprises a polyolefin resin. Examples of the polyolefin resin comprised in the protective film may include polyethylene and polypropylene, and the polyolefin resin may be either a homopolymer or a copolymer. Among the polyolefin resins, polyethylene is preferable.

As such polyethylene, low density polyethylene (LDPE), linear low density polyethylene (LLDPE), very low density polyethylene (VLDPE), medium density polyethylene (MDPE), high density polyethylene (HDPE), etc. can be used, and among others, low density polyethylene is preferable.

Moreover, as such a polyolefin copolymer, a copolymer of ethylene or propylene with a monomer copolymerizable therewith can be used. Examples of the monomers that can be copolymerized with ethylene or propylene may include α-olefins, styrenes, dienes, cyclic compounds, and an oxygen atom-containing compound.

Examples of the α-olefins may include 1-butene, 3-methyl-1-butene, 3-methyl-1-pentene, 4-methyl-1-pentene, 1-pentene, 1-hexene, 1-heptene, 1-octene, 1-decene, 1-tetradecene, 1-hexadecene, 1-octadecene, and 1-eicosene. Examples of the styrenes may include styrene, 4-methylstyrene, and 4-dimethylaminostyrene. Examples of the dienes may include 1,3-butadiene, 1,5-hexadiene, 1,4-hexadiene, and 1,7-octadiene. Examples of the cyclic compounds may include norbornene and cyclopentene. Examples of the oxygen-containing compounds may include hexenol, hexenoic acid, and methyl octenate. These copolymerizable monomers may be used alone or in combination of two or more types. The copolymer may also be a copolymer of ethylene and propylene.

Furthermore, the copolymer may be any of an alternating copolymer, a random copolymer, and a block copolymer.

The polyolefin resin comprised in the base material of the protective film may comprise a modified polyolefin resin that is modified with a small amount of carboxyl group-containing monomer such as acrylic acid, maleic acid, methacrylic acid, maleic anhydride, fumaric acid, or itaconic acid. The modification can be usually carried out by copolymerization or graft modification.

The content of the thermoplastic resin (e.g., a polyolefin resin) in the base material of the protective film is preferably 80% by weight or more, more preferably 90% by weight or more, and particularly preferably 95% by weight or more, with respect to the total weight of the base material.

The adhesive layer of the protective film preferably comprises an elastomer or a thermoplastic resin. Examples of the thermoplastic resin comprised in the adhesive layer may include polyolefin resins such as polyethylene and polypropylene, and the thermoplastic resin may be either a homopolymer or a copolymer. Among the polyolefin resins, polyethylene is preferable.

The content of the elastomer or the thermoplastic resin in the adhesive layer of the protective film is preferably 80% by weight or more, more preferably 90% by weight or more, and particularly preferably 95% by weight or more, with respect to the total weight of the adhesive layer.

The thickness of the protective film is preferably 10 to 100 μm, and more preferably 20 to 80 μm. Even in a case where the protective film is composed of two or more layers, it is preferable that the total thickness of individual layers is within the above-described range.

In a protective film, before the protective film is attached to the hard coat layer (unattached), the adhesive surface of the protective film that will be allowed to come into contact with the hard coat layer preferably has a surface roughness Sa value (ISO 25178) of 0.100 μm or less. The value of the surface roughness Sa of the adhesive surface of the protective film in an unattached state is more preferably 0.090 μm or less, further preferably 0.080 μm or less, and particularly preferably 0.070 μm or less.

The value of the adhesive force of the adhesive surface of the protective film is preferably 5 (mN/25mm) or more and 5000 (mN/25mm) or less, and more preferably 9 (mN/25mm) or more and 3000 (mN/25mm) or less, against the surface of the PMMA (polymethyl methacrylate resin layer).

[5] Method for producing thermoforming laminate

The thermoforming laminate according to the embodiment is produced as follows. First, the material of the base material layer is processed into a layer (sheet) by a conventional method to prepare a base material layer. For example, extrusion molding, cast molding, etc. can be used. An example of the extrusion molding may be a method comprising melting and kneading pellets, flakes or powders of a resin composition in an extruder, then extruding the resultant from a T-die or the like, and then cooling and solidifying the resulting semi-molten sheet, while being pressed between rolls, to form a sheet.

Thereafter, a hard coat composition obtained by mixing the above-mentioned materials is applied onto the outer surface of the resulting base material layer having a single layer or multiple layers to form a hard coat layer.

Furthermore, the above-mentioned protective film is adhered onto the hard coat layer to produce a thermoforming laminate.

[6] Thermoforming of laminate

The thermoforming laminate according to the embodiment is an after-cure type. Therefore, the thermoforming laminate according to the embodiment can be molded while the hard coat layer is uncured. Specifically, for example, the

thermoforming laminate is molded into a desired shape (a molded intermediate), the protective film is peeled off, and the hard coat layer exposed on the surface is cured. That is, according to one embodiment of the present invention, there is provided a molded body formed by curing the uncured hard coat layer in the molded intermediate that is obtained by molding the after-cure type thermoforming laminate. In addition, according to another embodiment, there is provided a method for producing a molded body, which comprises thermoforming the after-cure type thermoforming laminate, removing a protective film from the thermoformed after-cure type thermoforming laminate, and curing a hard coat layer exposed on the surface by removing the protective film. As a method of molding the laminate, any method can be used, as long as it is a method of heating and molding a film. For example, the laminate can be thermoformed into a desired shape by air pressure molding of heating the base material and molding it with air pressure, vacuum pressure molding of molding the base material under vacuum conditions, TOM molding, insert molding, etc. Among these, from the viewpoint of environmental load, it is desired to use insert molding.

The molding temperature is mainly determined by the Tg (glass transition temperature) of the thermoplastic resin comprised in the base material layer. The molding temperature is preferably a temperature that is about 0°C to 70°C higher, and more preferably about 20 to 40°C higher, than the Tg of the thermoplastic resin comprised in the base material layer. For example, when the laminate has a base material layer containing a general bisphenol A polycarbonate resin, molding is optimally performed in the range of 170°C to 190°C. The thermoforming laminate according to the embodiment can be molded with a protective film attached thereto, since the polymerization reaction (curing) of the hard coat layer hardly proceeds even at the above-described temperature. By performing a series of operations with a protective film attached, it is possible to prevent the hard coat layer from being scratched or foreign matters from being caught during molding.

[7] Production of molded body

As described above, when the protective film is removed from the laminate thermoformed to a predetermined shape and the hard coat layer is then cured, a molded body such as a cured film can be obtained. The means for curing the hard coat layer can be appropriately determined according to the composition of the hard coat layer. The obtained molded body can be used as a resin film laminate used in, for example, mobile devices, automobile interior materials, home appliances, etc.

Examples

Hereinafter, the present invention will be described in more detail in the following examples. However, these examples are not intended to limit the content of the present invention.

(Example 1)

30 Parts by weight of nanosilica particles (manufactured by Nissan Chemical Corporation, ORGANOSILICASOL MEK-AC-4130Y; average particle diameter: 40 to 50 nm) was mixed into 70 parts by weight of ultraviolet-curable acryloyl polymer (manufactured by Kyoeisha Chemical Co., Ltd., SMP-360A; acrylic equivalent: 360 g/eq). Furthermore, 3 parts by weight of the photopolymerization initiator ESACURE-ONE, 4 parts by weight of the silicone-based leveling agent BYK-UV3575 , and 1 parts by weight of the hindered amine-based light stabilizer LA-81 (manufactured by ADEKA) were added to the mixture. Thereafter, cyclohexanone was added to the mixture as a dilution solvent to a solid content concentration of 25% by weight, and the obtained mixture was then stirred to obtain a hard coat composition.

As a base material layer, a resin film, in which a polycarbonate resin and a PMMA resin were laminated on each other, was prepared. The above obtained hard coat composition was applied onto the base material layer (the acrylic resin side). The application step was performed using a bar coater, and the applied hard coat composition was then dried at 130°C for 3 minutes. The formed hard coat layer had a thickness of approximately 4 μm.

(Example 2)

A thermoforming laminate was produced in the same manner as that of Example 1, with the exception that 5 parts by weight of the ultraviolet absorber Tinuvin 477 (manufactured by BASF) was used instead of the light stabilizer LA-81.

(Example 3)

A thermoforming laminate was produced in the same manner as that of Example 1, with the exception that 1 part by weight of the light stabilizer Tinuvin 123 (manufactured by BASF) was used instead of the light stabilizer LA-81.

(Example 4)

A thermoforming laminate was produced in the same manner as that of Example 1, with the exception that 1 part by weight of the light stabilizer Tinuvin 770DF (manufactured by BASF) was used instead of the light stabilizer LA-81.

(Example 5)

A thermoforming laminate was produced in the same manner as that of Example 1, with the exceptions that SMP-550AP (acrylic equivalent: 550 g/eq) manufactured by Kyoeisha Chemical Co., Ltd. was used as an ultraviolet-curable acryloyl polymer, and that a light stabilizer was not used.

(Example 6)

A thermoforming laminate was produced in the same manner as that of Example 3, with the exceptions that 30 parts by weight of MEK-ST-L (manufactured by Nissan Chemical Corporation; average particle diameter: 45 nm) was used as nanosilica particles.

(Comparative Example 1)

A thermoforming laminate was produced in the same manner as that of Example 1, with the exception that a light stabilizer was not used.

< Evaluation of physical properties >

The thermoforming laminates produced as above, individual constituent members of the thermoforming laminates, and the hard coat layers after curing were evaluated in terms of various physical properties as follows.

(1) Nanoindenter hardness of uncured hard coat layer

With regard to the uncured hard coat layers obtained in the Examples and Comparative Examples, the nanoindenter hardness of each uncured hard coat layer pushed into the thickness direction was measured using a nano indentation tester (manufactured by ELIONIX INC.; ENT-NEXUS) under the following conditions. The measurement position was set to be the central portion of the hard coat layer, and the average value of measurements at 25 points was taken as an indentation hardness (N/mm$^2$).

Indenter: Berkovich indenter (vertical angle: 65.03°)
Surface detection: The applied load was set, so that the displacement amount became 1/10 of the hard coat layer (0.5 mN).
Load curve: 10 seconds 0.5 mN for (linear)
Retention time: 5 seconds 0.5 mN
Unloading curve: 10 seconds 0 mN (linear)
Sample temperature: 30°C
Device installation environment: 23°C, 50% RH

Using the above-described measurement results, the nanoindenter hardness was calculated according to ISO14577-1 2002-10-01 Part 1 (calculation using the built-in software of the device).
It is to be noted that since the hardness of the sample changes due to the influence of moisture absorption, the measurement was carried out after the sample had been left at rest for 24 hours or more in an environment of 23°C and 50% RH.

(2) Weather resistance test

First, the hard coat layers of the thermoforming laminates obtained in the Examples and Comparative Examples were irradiated with ultraviolet light to harden the hard coat layers. The ultraviolet light irradiation was performed using the conveyor-type UV irradiator ECS-401GX manufactured by EYE GRAPHICS CO., LTD., under the conditions of 700 mj/cm$^2$ (measurement wavelength: 360 nm, high-pressure mercury lamp).
The weather resistance test was performed using SUV-W161 manufactured by Iwasaki Electric Co., Ltd., under the following conditions.

Light source: Metal halide lamp
Test environment: 63°C (black panel temperature), 50% RH
Illuminance: 50 mW/cm$^2$ (365 nm)
Irradiation cycle: 50 hours (continuous irradiation)
Illuminance meter: Handy type illuminance meter (model: UVP-365-01)

[High energy ultraviolet illuminance meter for metal halide lamp type testing, JIS C 1613 compliant]

Temperature control: Closed circulation type (black panel temperature PID type)
Humidity control: Humidifier control using a capacitance humidity sensor

Before and after the weather resistance test, the nanoindenter hardness of the hard coat layer after curing was measured according to the method described above in (1) (ISO14577-1).

(3) Adhesion after weather resistance test

After the weather resistance test had been performed using the method described in (2) above, the adhesion between the base material layer and the hard coat layer of the resulting sample was evaluated. The adhesion was evaluated according to the evaluation method of JIS K5600-5-6: 1999. If the edges of the cuts were completely smooth and there was no peeling in any of the grids, it was evaluated as A, if peeling occurred in 40% or less of the grids, it was evaluated as B, and if peeling occurred in 40% or more of the grids, it was evaluated as C.

(4) Scratch resistance

The surface of the hard coat layer after curing was scratched by moving a #0000 steel wool back and forth 15 times under a pressure of 100 gf/cm$^2$. The haze values before and after scratching were measured using a haze meter (manufactured by MURAKAMI COLOR RESEARCH LABORATORY CO., LTD.; HM-150) in accordance with JIS K 7136: 2000. Thereafter, the absolute value ($\Delta H$) of a haze change before and after scratching was calculated. When the $\Delta H$ value was 3.0% or less, the scratch resistance was evaluated to be favorable (A).

(5) Appearance after injection molding

The thermoforming laminate prepared above was injection-molded according to the following procedures, and the appearance after the injection molding was evaluated.

(a) Air pressure molding

The thermoforming laminate in an uncured state was preheated at 190°C for about 40 seconds. Immediately after that, the film was pressed against a mold with high-pressure air of 1.5 MPa to carry out shaping. At this time, a mold having a right-angled protrusion with a deep drawing height was used. It is to be noted that for the pressure molding, a right-angled mold, in which both the vertical and horizontal sizes are 100 mm and the radius R of the area in contact with the right-angled part of the mold was 2 mm and the height was 7 mm, was used.

(b) Injection molding

The film after the above-described shaping was placed on the cavity surface of a mold for injection molding that was similar to that used for the above-described air pressure molding, and a molten thermoplastic resin was then injected to produce an insert-molded film product. A polycarbonate resin (manufactured by Mitsubishi Engineering-Plastics Corporation: Iupilon H-3000) was used as such an injected resin. At this time, the mold temperature on the hard coat layer side was set to be 60°C. The appearance after the injection molding was evaluated, and whether or not there were any appearance abnormalities, such as whitening on the surface, was confirmed.

The compositions and evaluation results of the thermoforming laminates according to the Examples and Comparative Examples are summarized in Tables 2 and 3 below. In Table 2, the units of individual numerical values are "part by weight. "

[Table 2]

| | | Example 1 | Example 2 | Example 3 | Example 4 | Example 5 | Example 6 | Comp.Ex. 1 |
|---|---|---|---|---|---|---|---|---|
| (Meth)acryloyl polymer | SMP-360A | 70 | 70 | 70 | 70 | | 70 | 70 |
| | SMP-550AP | | | | | 70 | | |
| Nanosilica particles | MEK-AC-4130Y | 30 | 30 | 30 | 30 | 30 | | 30 |
| | MEK-ST-L | | | | | | 30 | |
| Leveling agent | BYK-UV3575 | 4 | 4 | 4 | 4 | 4 | 4 | 4 |
| Photopolymerization initiator | Esacure One | 3 | 3 | 3 | 3 | 3 | 3 | 3 |
| Ultraviolet absorber | Tinuvin477 | | 5 | | | | | |
| Light stabilizer | LA81 | 1 | | | | | | |
| | Tinuvin123 | | | 1 | | | 1 | |
| | Tinuvin770DF | | | | 1 | | | |

[Table 3]

| | Nanoindenter hardness (after curing; N/mm²) | | | Adhesion | Appearance abnormality after injection molding | Scratch resistance test (after curing) | Nanoindenter hardness |
|---|---|---|---|---|---|---|---|
| | Before weather resistance test | After weather resistance test | Change percentage | | | | (uncured; N/mm²) |
| Example 1 | 449.8 | 411.1 | -8.6% | B | Non | A | 246.1 |
| Example 2 | 464.8 | 459.8 | -1.1% | B | Non | A | 243.0 |
| Example 3 | 456.5 | 452.6 | -0.8% | A | Non | A | 240.1 |
| Example 4 | 472.1 | 486.0 | 2.9% | A | Non | A | 252.7 |
| Example 5 | 394.1 | 413.9 | 5.0% | A | Non | A | 262.0 |
| Example 6 | 422.5 | 473.4 | 12.1% | A | Non | A | 220.1 |
| Comp,Ex, 1 | 469.2 | 402.4 | -14.2% | C | Non | A | 237.9 |

From Table 2 and Table 3, it is found that the hard coat layers of the Examples have excellent weather resistance, and as a result, these hard coat layers also have excellent adhesion to the base material layer. These properties are considered to be caused by a small change amount in the nanoindenter hardness before and after the weather resistance test. In addition, since the hard coat layers of the Examples also have excellent scratch resistance, these hard coat layers are hardly scratched. These properties can be very beneficial, particularly in products used in environments exposed to sunlight (e.g., interior and exterior components of automobiles, building materials, mobile devices, etc.). Furthermore, since the uncured hard coat layers of the thermoforming laminates of the Examples have high nanoindenter hardness, these thermoforming laminates can be said to be laminates that are excellent in terms of scratch resistance in an uncured state and appearance after injection molding, and further, these thermoforming laminates are also excellent in terms of formability.

Several embodiments of the present invention have been described. These embodiments are presented as examples and are not intended to limit the scope of the invention. These novel embodiments can be carried out in various other forms, and various omissions, replacements and modifications can be made in a range that does not depart from the gist of the invention. These embodiments and variations thereof are included in the scope and gist of the invention, and are also included in the inventions recited in the claims and its equivalents thereof.

Reference Signs List

10... thermoforming laminate, 12... protective film, 16...hard coat layer, 20... polymethyl methacrylate layer (base material layer), 22... polycarbonate layer (base material layer).

**Claims**

1. An after-cure type thermoforming laminate layered a base material layer, an uncured hard coat layer and a protective film in this order, wherein

    after removing the protective film and curing the hard coat layer, the nanoindenter hardness (Hi) of the hard coat layer before a weather resistance test and the nanoindenter hardness (Hf) thereof after the weather resistance test satisfy the following relationship:

    $$0.9\ Hi < Hf < 1.4\ Hi,$$

    the nanoindenter hardness is measured at 30°C in accordance with ISO14577-1, and
    the weather resistance test is performed under the conditions of illuminance of 50 mW/cm², a black panel temperature of 63°C, a relative humidity of 50%, and 50 hours (continuous irradiation).

2. The after-cure type thermoforming laminate according to claim 1, wherein

the hard coat layer comprises a polymer having a (meth)acryloyl group and inorganic oxide nanoparticles, and the content of the polymer having a (meth)acryloyl group in the hard coat layer is 40 to 99 parts by weight, and the content of the inorganic oxide nanoparticles therein is 1 to 60 parts by weight, when the total of the polymer and the nanoparticles is set to be 100 parts by weight.

**3.** The after-cure type thermoforming laminate according to claim 2, wherein the polymer having a (meth)acryloyl group has an acrylic equivalent of 250 to 700 g/eq, and the inorganic oxide nanoparticles have an average particle diameter of 5 to 150 nm.

**4.** The after-cure type thermoforming laminate according to claim 2 or 3, wherein

the hard coat layer further comprises a light stabilizer and/or an ultraviolet absorber, and
the total content of the light stabilizer and/or the ultraviolet absorber is 0.1 to 10 parts by weight, when the total of the polymer and the nanoparticles comprised in the uncured hard coat layer is set to be 100 parts by weight.

**5.** The after-cure type thermoforming laminate according to any one of claims 1 to 4, wherein the uncured hard coat layer has a nanoindenter hardness at 30°C of 200 $N/mm^2$ or more.

**6.** The after-cure type thermoforming laminate according to any one of claims 1 to 5, wherein the hard coat layer is active energy ray curable.

**7.** The after-cure type thermoforming laminate according to any one of claims 1 to 6, wherein the base material layer comprises a polycarbonate resin.

**8.** A molded body, which is obtained by curing an uncured hard coat layer in a molded intermediate obtained by molding the after-cure type thermoforming laminate according to any one of claims 1 to 7.

**9.** A method for producing a molded body, comprising:

thermoforming the after-cure type thermoforming laminate according to any one of claims 1 to 7,
removing a protective film from the thermoformed after-cure type thermoforming laminate, and
curing a hard coat layer exposed on the surface by removing the protective film.

**10.** The method according to claim 9, wherein the thermoforming is carried out by insert molding.

[Figure 1]

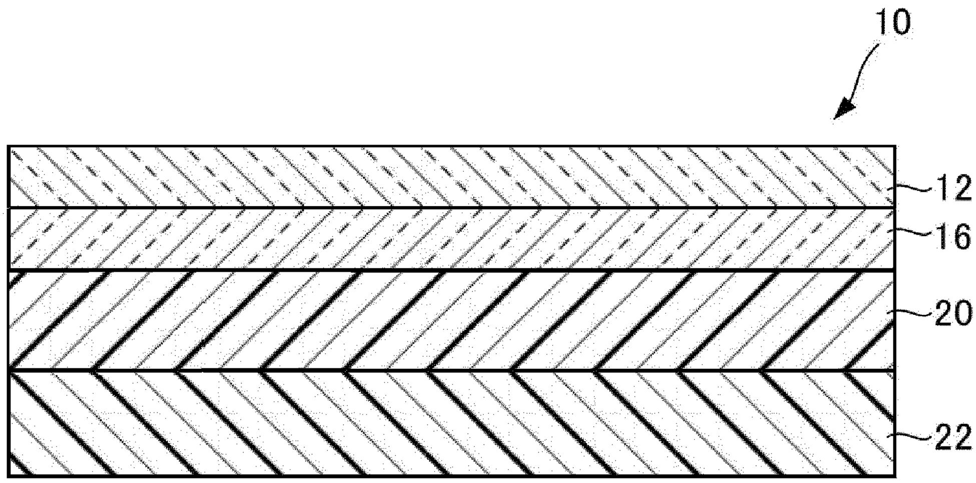

## INTERNATIONAL SEARCH REPORT

International application No.
**PCT/JP2023/039552**

**A. CLASSIFICATION OF SUBJECT MATTER**

***B32B 27/00***(2006.01)i; ***B29C 45/14***(2006.01)i; ***B29C 51/10***(2006.01)i; ***B29C 51/14***(2006.01)i; ***B32B 27/16***(2006.01)i
FI: B32B27/00 B; B29C45/14; B29C51/10; B29C51/14; B32B27/16 101

According to International Patent Classification (IPC) or to both national classification and IPC

**B. FIELDS SEARCHED**

Minimum documentation searched (classification system followed by classification symbols)

B32B1/00-43/00; B29C45/14; B29C51/10; B29C51/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2014/061402 A1 (MITSUBISHI RAYON CO., LTD.) 24 April 2014 (2014-04-24) claims, paragraphs [0041]-[0049], [0087]-[0088], [0106]-[0109], [0125]-[0143] | 1-10 |
| A | WO 2020/116576 A1 (NIPPON PAINT AUTOMOTIVE COATINGS CO LTD) 11 June 2020 (2020-06-11) claims, paragraphs [0011]-[0012], [0086]-[0097], [0119]-[0120], [0167]-[0188], example 44 | 1-10 |
| A | JP 2019-147885 A (PANAC CO LTD) 05 September 2019 (2019-09-05) claims, paragraphs [0011], [0024]-[0059], [0088], examples 1-7 | 1-10 |
| A | JP 2014-128937 A (KYOWA LEATHER CLOTH CO LTD) 10 July 2014 (2014-07-10) claims, paragraphs [0016]-[0026], [0033]-[0034] | 1–10 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **11 January 2024** | **23 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2023/039552**

| Patent document cited in search report | Publication date (day/month/year) | Patent family member(s) | Publication date (day/month/year) |
|---|---|---|---|
| WO 2014/061402 A1 | 24 April 2014 | US 2015/0299451 A1<br>claims, paragraphs [0057]-[0068], [0116]-[0118], [0155]-[0160], [0188]-[0208]<br>EP 2910583 A1<br>CN 104718230 A<br>KR 10-2015-0074090 A | |
| WO 2020/116576 A1 | 11 June 2020 | US 2022/0032587 A1<br>claims, paragraphs [0074]-[0075], [0252]-[0276], [0317]-[0327], [0433]-[0499], example 44<br>EP 3892465 A1<br>KR 10-2021-0102286 A<br>CN 113365825 A<br>CA 3122154 A<br>TW 202035543 A | |
| JP 2019-147885 A | 05 September 2019 | (Family: none) | |
| JP 2014-128937 A | 10 July 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017508828 A
- WO 2021157588 A